(19) Europäisches Patentamt / European Patent Office / Office européen des brevets

(11) **EP 2 882 812 B1**

(12) **EUROPÄISCHE PATENTSCHRIFT**

(45) Veröffentlichungstag und Bekanntmachung des Hinweises auf die Patenterteilung:
**03.05.2017   Patentblatt 2017/18**

(21) Anmeldenummer: **13737207.4**

(22) Anmeldetag: **10.07.2013**

(51) Int Cl.:
***C09D 5/00*** *(2006.01)*

(86) Internationale Anmeldenummer:
**PCT/EP2013/064564**

(87) Internationale Veröffentlichungsnummer:
**WO 2014/023505 (13.02.2014 Gazette 2014/07)**

(54) **UNTERKRITISCH FORMULIERTE BESCHICHTUNGEN**

SUBCRITICALLY FORMULATED COATINGS

REVÊTEMENT DE FORMULE SOUS-CRITIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2012   DE 102012213978**

(43) Veröffentlichungstag der Anmeldung:
**17.06.2015   Patentblatt 2015/25**

(73) Patentinhaber: **Evonik Degussa GmbH**
**45128 Essen (DE)**

(72) Erfinder:
• **SCHATTKA, Jan, Hendrik**
  **64297 Darmstadt (DE)**
• **MATTEN, Thomas**
  **51427 Bergisch Gladbach (DE)**
• **FENGLER, Stephan**
  **60488 Frankfurt (DE)**
• **HEILEN, Wernfried**
  **46519 Alpen (DE)**
• **HERMES, Florian**
  **60313 Frankfurt (DE)**
• **JUNG, Herbert**
  **63791 Karlstein (DE)**

(56) Entgegenhaltungen:
**EP-A2- 0 022 633      EP-A2- 1 197 503**
**WO-A1-00/68304        WO-A1-2007/006766**
**WO-A1-2011/009875**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 882 812 B1

**Beschreibung**

**Gebiet der Erfindung**

Die vorliegende Erfindung betrifft wässrige Dispersionslacke und -farben, insbesondere zur Anwendung als Bautenfarbe, die eine niedrige Pigment Volumen Konzentration (PVK), kleiner der kritischen Volumen Konzentration (KPVK) der Lacke und Farben aufweisen. Anders als im Stand der Technik weisen die erfindungsgemäßen Dispersionslacke und -Farben trotzdem eine hohe Wasserdampfdurchlässigkeit und eine geringe Wasseraufnahme auf. Weiterhin zeichnen sie sich durch gute Witterungsbeständigkeit, Farbton- und Kreidungsstabilität sowie mechanischer Beständigkeit, wie einen guten Nassabrieb, aus. Der Glanzgrad dieses Beschichtungsstoffes ist von stumpfmatt bis glänzend einstellbar.

**Stand der Technik**

Die Entwicklung einer optimierten Bautenfarbe, insbesondere für Außenanwendungen ist schon lange Ziel der industriellen Entwicklung. Viele der Eigenschaften einer Bautenfarbe können über die Pigmentvolumenkonzentration eingestellt werden. Die Pigmentvolumenkonzentration beschreibt rechnerisch den Anteil von Füllstoffen und Pigmenten am Gesamtvolumen der getrockneten Beschichtung:

$$\% \text{ PVK} = (\text{Volumen der Pigmente und Füllstoffe} \times 100) / (\text{Volumen des}$$

$$\text{Bindemittel} + \text{Volumen der Pigmente und Füllstoffe})$$

Mit steigender PVK nimmt also der Bindemittelanteil ab. Die kritische Pigmentvolumenkonzentration ist genau der Wert, an dem alle Zwischenräume zwischen Pigmenten und/oder Füllstoffen noch mit Bindemittel gefüllt sind. So entsteht also ein zusammenhängender Film. Erst bei Überschreitung der KPVK wird der Film offenporig, so dass Hohlräume entstehen. Bei weiterer Erhöhung der PVK fungiert das Bindemittel nur noch als eine Art Klebstoff zwischen den Pigmenten und/oder Füllstoffen. Wie dem Fachmann bekannt, ist die KPVK abhängig von der Größe der Füllstoffe, so dass der Begriff z. B. bei sehr grobem Füllgut nicht verwendet wird. Bei Überschreitung der KPVK ändern sich viele Eigenschaften der Beschichtung drastisch. So steigt insbesondere die Durchlässigkeit für Wasser und Wasserdampf der Farben sprunghaft an, während der Glanz und die Nassabriebbeständigkeit abfallen.

Dispersionsfarben mit einer hohen Pigment Volumenkonzentration (PVK), die größer als die kritische Pigment Volumenkonzentration (KPVK) ist, weisen eine erhöhte Oberflächenrauigkeit auf und erscheinen daher matt. Durch den hohen Füllgrad sind diese Beschichtungen offenporig und zeigen daher eine gute, d.h. hohe, Wasserdampfdurchlässigkeit. Auf Grund des geringen Bindemittelanteils haben solche Farben Schwächen bei der Farbton- und Kreidungsstabilität sowie der mechanischen Beständigkeit. Eine geringe Wasseraufnahme wird wie dem Fachmann bekannt z. B. durch die Verwendung von Wachsen, Siliconharzen oder Aminosiloxanen erzielt.

Lacke und Farben, die unterkritisch formuliert sind, weisen die oben genannten guten Eigenschaften und Beständigkeiten auf, jedoch ist die Wasserdampfdurchlässigkeit der Farbfilme unzureichend ($s_d$ - Wert > 0,25 m).

Zur Bestimmung der KPVK macht man sich die sprunghafte Änderung von Eigenschaften zu nutze, wie z. B. den sprunghaften Anstieg der Wasserdampfdurchlässigkeit. Eine andere Möglichkeit ist der sogenannte Gilsonite Test, bei dem die Absorption einer Testflüssigkeit in den Poren zunutze gemacht wird. So absorbiert ein poröser Anstrichfilm eine Gilsonite-Lösung oberhalb der KPVK irreversibel, so dass sich die KPVK anhand einer beginnenden Verfärbung feststellen lässt. Die Durchführung des Gilsonite Testes erfolgte nach "KRONOS Titandioxid in Dispersionsfarben", H. Dörr, F. Holzinger, KRONOS Titan GmbH, Leverkusen 1989.

Ein bisher ungelöstes Problem besteht darin, Dispersionsfarben und -lacke zur Verfügung zu stellen, die einerseits eine gute Farbtonstablität (auch bei Volltönen) und gute Kreidungsstabilität aufweist, darüber hinaus aber auch gleichzeitig eine geringe Pigment Volumen Konzentration (< KPVK) und eine hohe Wasserdampfdurchlässigkeit zeigen.

In Strauss et al. (Surface Coatings Australia 1987, 24(11), 6-15) wird der Einsatz von Emulsionspolymerisaten des Typs Ropaque (Fa. Rohm & Haas) in Fassadenfarben beschrieben. Ziel des Einsatzes war jedoch nicht, die Wasserdampfdurchlässigkeit zu verbessern, sondern die Deckkraft einer Beschichtung zu erhöhen. Des Weiteren verfilmen die genannten Produkte, wie bei Strauss et al. explizit ausgeführt, bei Raumtemperatur nicht. Die Herstellung der dort verwendeten Emulsionspolymerisaten mit Kern-Schale-Struktur, im Weiteren auch als Hohlkugeln bezeichnet, ist in EP 0 022 633 beschrieben. Diese Partikel sind explizit nicht filmbildend bei einer Temperatur von 20°C. Diese Hohlkugeln wirken ausschließlich als Pigment bzw. Mattierungsmittel und weisen in der Schale eine Glasübergangstemperatur von mindestens 50 °C auf.

WO 2011/009875A1 beschreibt die Verwendung filmbildender Polymere und organischer Hohlteilchen für Beschichtungsmittel mit dem Zweck der Steigerung der Ergiebigkeit und der Nassabriebsbeständigkeit von Außen- und Innenfarben. WO 2007/006766 beschreibt einen ähnlichen Herstellprozess. Beide Schriften beschreiben mehrstufige Emulsionspolymerisate, deren äußere Schalen eine Glasübergangstemperatur nach Fox von mindestens 50 °C haben und deren äußere Schalen die inneren Schalen umhüllen.

**Aufgabe**

Vor dem Hintergrund war es Aufgabe der vorliegenden Erfindung, Dispersionslacke und -farben herzustellen, die gleichzeitig eine gute Wasserdampfdurchlässigkeit aufweisen und keine optischen Nachteile sowie keine verminderten Gebrauchseigenschaften gegenüber dem Stand der Technik aufweisen.

Weiterhin war es Aufgabe der vorliegenden Erfindung, dass der Dispersionslack sich durch hohen Glanz und gute Witterungsbeständigkeit, Farbtonstabilität insbesondere durch eine gute Nassabriebsbeständigkeit auszeichnet.

Weiterhin war es Aufgabe der vorliegenden Erfindung, dass die Dispersionsfarben die unterkritisch formuliert sich durch eine gute Witterungsbeständigkeit, insbesondere durch eine Farbtonstabilität auszeichnet.

Darüber hinaus war es Aufgabe der vorliegenden Erfindung, eine technisch einfach durchzuführende Herstellung und Verwendbarkeit der Dispersionslacke und -farben zu gewährleisten.

Weitere nicht explizit genannte Aufgaben können sich aus der folgenden Beschreibung, den Ansprüchen oder den Ausführungsbeispielen ergeben, ohne dass diese gesondert aufgeführt werden müssen.

**Lösung**

Die Aufgabe wurde durch Verwendung von polymeren, einen Hohlraum aufweisenden Mikropartikeln in Dispersionslacken zur Verbesserung der Wasserdampfdurchlässigkeit gelöst. Diese zeichnen sich insbesondere dadurch aus, dass der Dispersionslack mindestens 3,0 Gew.-%, bevorzugt 5 Gew.-% und besonders bevorzugt mindestens 10 Gew.-% der polymeren Mikropartikel mit hydrophilen Domänen enthält, und dass die Pigmentvolumenkonzentration (PVK) der Farbe kleiner als der KPVK ist.

Angaben in Gew.-% der gequollenen Polymerisate beziehen sich in dieser Anmeldung - sofern nicht ausdrücklich anders angegeben - auf den Feststoffgehalt von 100 % der gesamten Formulierung, ausschließlich des Wassers.

Die Aufgaben wurden weiterhin gelöst durch die Verwendung von mehrstufigen Emulsionspolymerisaten, welche in mindestens einer Polymerisationsstufe Säuregruppen enthalten. Der Anteil an ungesättigten säurefunktionellen Monomeren beträgt dabei bevorzugt mehr als 5%, besonders bevorzugt mehr als 30% und besonders bevorzugt mehr als 45% bezogen auf die Monomere in dieser Polymerisationsstufe. Die Schale hat eine Glasübergangstemperatur von unter 50 °C. Bevorzugt ist eine Glasübergangstemperatur der Schale von unter 30 °C, besonders bevorzugt eine Glasübergangstemperatur von unter 20 °C. Weiterhin haben die Emulsionspolymerisate bevorzugt einen Durchmesser zwischen 30 nm und 1200 nm, bevorzugt zwischen 50 nm und 600 nm und besonders bevorzugt zwischen 60 nm und 300 nm. Die Bestimmung der Teilchengröße erfolgt durch Vermessung und Auszählung einer statistisch signifikanten Menge an Partikeln anhand von transmissionselektronenmikroskopischen Aufnahmen.

Insbesondere zeichnen sich die erfindungsgemäß verwendeten Emulsionspolymerisate dadurch aus, dass sich der Hohlraum in den Emulsionspolymerisaten durch Quellung bei einer Temperatur oberhalb von 0°C und unterhalb von 50°C, bevorzugt bei Raumtemperatur ausbildet.

Die Bezeichnung "Hohlkugel" im Rahmen dieser Erfindung beschreibt nicht zwangsläufig Mikropartikel, die einen Hohlraum enthalten. Die Bezeichnung "Hohlraum" beschreibt hydrophile Domänen innerhalb der polymeren Mikropartikel, welche z. B. mit Wasser angequollen werden können. Diese Verringerung der Polymerkonzentration in diesen Bereichen der Mikropartikel führt zu der Bezeichnung Hohlkugeln. Verfahren zur Herstellung von Hohlkugeln werden unter anderem vom C.J. McDonald und M.J. Devon in Advances in Colloid and Interface Science, Volume 99, Number 3, Pages 181-213 beschrieben. Im fertigen Film können die Mikropartikel zumindest teilweise den partikulären Charakter verlieren, da mindestens die Schale gemeinsam mit dem Bindemittel einen Film bildet.

Das verwendete Emulsionspolymerisat kann erfindungsgemäß in zwei aufeinanderfolgenden Stufen mittels Emulsionspolymerisation hergestellt werden. Die Herstellung erfolgt dabei in der Regel mittels sequentieller Zugabe der Monomermischungen. Die erste Stufe kann jedoch auch getrennt hergestellt, optional aufgereinigt und als Saatlatex für die zweite Stufe in einer zweiten Emulsionspolymerisation verwendet werden. Der Polymerkern (A) wird dabei unter Copolymerisation eines oder mehrerer ungesättigter säurefunktioneller Monomere optional mit andren nicht funktionellen Monomeren und/oder vernetzenden bifunktionellen Monomeren hergestellt. Die Polymerschale (B) ist überwiegend aus nicht-ionischen, ethylenisch ungesättigten Monomeren zusammengesetzt. Optional kann die Partikelnukleierung durch Zugabe eines Saatlatex erfolgen. Bevorzugt ist die Polymerschale (B) dadurch gekennzeichnet, dass sie mindestens 0,5 Gew.-% eines vernetzenden bifunktionellen Monomeren enthält.

Der Polymerkern wird bevorzugt anschließend mit Hilfe einer oder mehrerer wässriger basischer Zusatzstoffe gequollen. Diese Quellung kann zu verschiedenen Zeitpunkten erfolgen wie z. B. direkt im Anschluss an die Synthese, besonders bevorzugt aber in der fertigen Formulierung. In der Formulierung wird auch ohne Zusatz von Hohlkugeln bevorzugt ein pH-Wert > 5, besonders bevorzugt >7 eingestellt. Zur Neutralisation müssen mindestens zum Teil bei Raumtemperatur nichtflüchtige Basen, insbesondere Basen mit einem Siedepunkt von mindestens 110 °C, wie z. B. Alkalimetallhydroxide oder Erdalkalimetall(hydr)oxide eingesetzt werden. Der Neutralisationsgrad, d. h. die Zahl an deprotonierten Carboxylatgruppen bezogen auf die eingesetzten Säuregruppen soll bevorzugt > 3% und besonders bevorzugt > 8% liegen. Besonders bevorzugt wird eine Mischung aus flüchtigen und nichtflüchtigen Basen, wie z. B. Ammoniak und Natriumhydroxid eingesetzt.

Bei den ungesättigten säurefunktionellen Monomeren handelt es sich um mit (Meth)acrylaten copolymerisierbare Säuren oder Anhydride, bevorzugt um Acrylsäure, Methacrylsäure, Maleinsäure, Fumarsäure, Itaconsäure und/oder Crotonsäure. Alternativ können hydrolysierbare Funkionalitäten wie ungesättigte Anhydride, insbesondere Maleinsäureanhydrid eingesetzt werden.

Bei den nicht-ionischen, ethylenisch ungesättigten Monomeren in der Polymerschale und im Polymerkern handelt es sich bevorzugt um Acrylate, Methacrylate, Styrol und/oder um Mischungen, überwiegend aus Acrylaten und/oder Methacrylaten und/oder Styrol. Alternativ können die Mischungen auch Butadien, Vinyltoluol, Ethylen, Vinylacetat, Vinylchlorid, Vinylidenchlorid, Acrylnitril, Acrylamid oder Methacrylamid enthalten. Bei den Acrylaten bzw. Methacrylaten - im Folgenden unter dem Begriff (Meth)acrylate zusammengefasst - handelt es sich bevorzugt um C1-C12-Alkylester der (Meth)acrylsäure oder Mischungen daraus.

In einer alternativen Ausführungsform weisen die Mikropartikel eine Struktur auf, bei der um den Kern mindestens zwei Schalen B1 und B2 angeordnet sind. Die Schalen werden gleichfalls sequentiell oder mit der Saatlatex-Methode realisiert und können sich in der Zusammensetzung zueinander gleichen oder unterscheiden. Die Polymerschalen sind analog zu einer einzelnen Schale B jeweils überwiegend aus nicht-ionischen, ethylenisch ungesättigten Monomeren zusammengesetzt. Es können Kern-Schale Teilchen dargestellt werden, deren Schalen einen Gradienten aufweisen. Bei den Polymerschalen handelt es sich um die innerste Schale B1 und die zweite sowie ggf. weitere Schalen B2, B3, etc. mit zunehmendem Abstand vom Kern.

Die Herstellung dieser polymeren Mikropartikel durch Emulsionspolymerisation sowie deren Quellung mit Hilfe von Basen wie z. B. Alkali- oder Erdalkalihydroxide sowie Ammoniak oder einem Amin werden ebenfalls in den europäischen Patentschriften EP 0 022 633 B1, EP 0 073 529 B1 sowie EP 0 188 325 B1 beschrieben. Bei der Herstellung durch Emulsionspolymerisation werden die Mikropartikel in Form einer wässrigen Dispersion erhalten. Entsprechend erfolgt der Zusatz der Mikropartikel zum Dispersionslack vorzugsweise ebenfalls in dieser Form. Bei der Formulierung des Lackes, sowie im Lack selbst sind die Hohlräume der Mikropartikel optional wassergefüllt. Ohne die Erfindung dahingehend einzuschränken wird davon ausgegangen, dass das Wasser die Partikel bei Verfilmung des Dispersionslacks - zumindest teilweise - verliert, wonach entsprechend gas- bzw. luftgefüllte Hohlkugeln vorliegen oder auch kollabierte Mikropartikel vorliegen.

Die erfindungsgemäß mit Mikropartikeln ausgestatteten Dispersionslacke und - farben werden bevorzugt als Bautenfarbe oder -lack verwendet. Der Dispersionslack enthält dazu mindestens 3,0 Gew.-%, insbesondere mindestens 5,0 Gew.-% und bevorzugt mindestens 10,0 Gew.-% der Mikropartikel in Form gequollener Emulsionspolymerisate zur Verbesserung der Wasserdampfdurchlässigkeit.

Bei den Bindemitteln kann es sich um Polyacrylate, Polymethacrylate, Polystyrole, Mischpolymerisate aus Acrylaten, Methacrylaten und/oder Styrolen, Polyvinylacetat, Polyacrylnitril, Polyether, Polyester, Polymilchsäuren, Polyamide, Polyesteramide, Polyurethane, Polycarbonate, amorphe oder teilkristalline Poly-$\alpha$-Olefine, EPDM, EPM, hydrierte oder nicht hydrierte Polybutadiene, ABS, SBR, Polysiloxane und/oder Block-, Kamm- und/oder Sterncopolymeren dieser Polymere handeln.

Bevorzugt handelt es sich bei den Bindemitteln um Polyacrylate, Styrol - Acrylate oder Polyvinylacetate.

Besonders bevorzugt wird die äußere bzw. eine der äußeren Schale der Hohlkugeln so gewählt, dass eine gemeinsame Filmbildung mit dem Bindemittel statt findet.

Wenn die polymeren Mikropartikel mit einem großen Anteil an verfilmender Schale ausgestattet sind, kann auf den Zusatz eines Bindemittels verzichtet werden.

Gleichfalls Bestandteil der vorliegenden Erfindung ist die Herstellung von Dispersionslacken und -farben, der gemäß der beschriebenen Verwendung mit Mikropartikeln, insbesondere mit Emulsionspolymerisaten und besonders bevorzugt mit (meth)acrylatbasierten Emulsionspolymerisaten, die eine Kern-Schale-Struktur aufweisen, ausgestattet sind. Bei den Kern-Schale-Partikeln handelt es sich dabei - wie beschrieben - um mit einem säurehaltigen, bei Raumtemperatur basisch quellbaren Kern und einer Schale, eine Glasübergangstemperatur von unter 50 °C aufweisend, ausgestatteten Kern-Schale-Partikel.

Neben den erfindungsgemäß verwendeten Emulsionspolymerisaten und den Bindemitteln können Verdünnungsmittel als weiterer Bestandteil in den Dispersionslacken enthalten sein. Bei diesen Verdünnungsmitteln handelt es sich in der Regel um Wasser oder Mischungen aus Wasser und anderen polaren Lösungsmitteln wie z.B. wassermischbaren Glycolethern und deren Acetaten oder hochsiedende Ester von Dicarbonsäuren.

Neben den erfindungsgemäß verwendeten Emulsionspolymerisaten, optionalen Verdünnungsmitteln und den Bindemitteln können solche Dispersionslacke verschiedene weitere Komponenten enthalten. Bei diesen zusätzlichen Komponenten kann es sich um spezifisch für die jeweilige Anwendung ausgesuchte Zuschlagsstoffe wie beispielsweise Füllstoffe, Farbstoffe, Pigmente, Additive, Verträglichkeitsvermittler, Cobindemittel, Colösungsmittel, Weichmacher, Schlagzähmodifier, Verdicker, Entschäumer, Dispergieradditive, Rheologieverbesserer, Haftvermittler, Konservierungsmittel, Kratzfestadditive, Katalysatoren oder Stabilisatoren handeln.

Der Polymergehalt der eingesetzten Mikropartikel kann - abhängig z.B. vom Durchmesser, dem Kern/Schale-Verhältnis und der Effizienz der Quellung - bei 2 bis 100 Vol% liegen.

Die folgenden Beispiele sind in keiner Weise dazu geeignet, die vorliegende Erfindung in irgendeiner Form einzuschränken. Sie dienen vielmehr dazu, mit beispielhaften Zusammensetzungen den technischen Effekt der vorliegenden Erfindung zu verdeutlichen.

**Beispiele**

Bestimmung der Filmporosität (Gilsonite Test)

Die Farbe wird auf einer Leneta-Folie (PVC-Folie) appliziert mit Hilfe eines Kastenrakels (200$\mu$m Naßfilm). Nach Trocknung im 50°C Ofen wird die Folie zur Hälfte 7 Sekunden in einer 10 %igen Gilsonite-Lösung (Lösung eines natürlichen Asphalts) eingetaucht. Anschließend sofort mit Testbenzin abgewaschen und mit einem stark saugenden Lappen abgewischt. Die Helligkeitsdifferenz ($\Delta$L*-Wert) zwischen der in Gilsonite Lösung eingetauchten Hälfte sowie der nicht modifizierten Fläche wird mit einem Spektralphotometer der Firma X-Rite bestimmt.

Bestimmung der Glasübergangstemperatur

Die Glasübergangstemperaturen wurden durch theoretische Berechnung mit Hilfe der Fox-Gleichung bestimmt.

Bestimmung des pH-Wertes

Der pH-Wert wird mit dem Präzisions-pH-Meter von Hanna Instruments bestimmt.

Bestimmung der Wasserabsorption

Die Bestimmung der Wasserabsorption ($W_{24}$-Wert) erfolgt gemäß EN 1062-3 bei einer Auftragsmenge der Farbe von 400 mL/m$^2$

Bestimmung der Wasserdampfdiffusion

Die Bestimmung der Wasserdampfdiffusion ($S_d$-Wert) erfolgt gemäß EN ISO 7783-2 bei einer Auftragsmenge der Farbe von 400 mL/m$^2$

Messung des Glanzwertes bei 20°

Zur Messung des Glanzwertes wird die Farbe mit einem 200 $\mu$m - Kastenrakel auf eine Glasplatte appliziert. Nach Trocknung bei Raumtemperatur wird der Glanz wird mit dem Reflektometer haze-gloss von Byk Gardner gemessen.

ASTM (Hübe)

Die Durchführung der Messung erfolgt nach ASTM D 2486. Die Farbe wird auf eine schwarze Kunststofffolie in 200 $\mu$m Nassschichtstärke appliziert und 7 Tage bei Raumtemperatur getrocknet. Darauf wird mit dem Scheuerprüfgerät Modell 494 von Erichsen, ausgestattet mit einer Nylonbürste so lange gescheuert, bis eine Beschädigung über der Scheuerkante erkennbar wird. Zur Beschleunigung des Testverfahrens wird eine abrasive Waschflüssigkeit verwendet.

**Herstellung von Hohlkugel-Dispersionen**

**Beipiel 1: Darstellung des Saatlatex**

Zur Herstellung der Monomeremulsion werden in einem Erlenmeyerkolben 450 g Methylmethacrylat, 5,38 g Disponil SUS IC 875 (Emulgator auf Basis Diisooctylsulfosuccinat) und 193 g VE-Wasser eingewogen. Die Mischung wird eine Minute kräftig gerührt, nach fünf Minuten Ruhepause wird weitere zehn Minuten kräftig gerührt bis zur vollständigen Ausbildung einer Emulsion.

In einem 1 L Reaktor werden 4,22 g Disponil SUS IC 875 und 360 g VE-Wasser vorgelegt und unter Rühren bei 150 U/min und $N_2$ Überleitung auf eine Innentemperatur von 74 °C aufgeheizt. Nach Erreichen der Reaktionstemperatur werden 51 g der Emulsion schnell in den Quickfitkolben gepumpt. Nun werden die Startreagenzien 2,1 mL 10%ig Natriumperoxodisulfatlösung in Wasser und 2,0 mL 10%ige Natriumhydrogensulfitlösung in Wasser hinzugegeben. Es folgt sofort ein Temperaturanstieg mit einer Temperaturspitze von ca. 80°C. Nach einer Minute Wartezeit wird weitere Monomeremulsion mit einer Dosiergeschwindigkeit von 3,0 g/Min für 10 Minuten weiter dosiert. In dieser Zeit wird die Innentemperatur auf 75 °C abgesenkt. Anschließend wird für weitere 82 Minuten mit einer Dosiergeschwindigkeit von 6,9 g/Min Monomeremulsion dosiert. Die Verfahrenstemperatur wird während der Dosierung auf 75 °C ±1 °C gehalten. Nach einer Nachreaktionszeit von 30 Minuten wir die Dispersion auf RT abgekühlt über eine 250 $\mu$m Gaze filtriert.

**Beipiel 2: Darstellung der Hohlkugel-Dispersion**

Für die erste Reaktionsstufe wird eine Monomermischung bestehend aus 35,3 g Methylmethacrylat, 25,5 g Methacrylsäure und 3,2 g n-Butylacrylat hergestellt. Für die zweite Reaktionsstufe wird eine Emulsion aus folgenden Komponenten hergestellt: 161,15 g Methylmethacrylat (MMA), 161,15 g Ethylhexylacrylat (EHA), 13,44 g Divinylbenzol, 20,00 g einer 15 gew%igen wässrigen Lösung Disponil SDS (Emulgator auf Basis Natriumlaurylsulfat), 128,2 g VE-Wasser und 0,26 g Natriumperoxodisulfat. Die Mischung wird eine Minute kräftig gerührt, nach fünf Minuten Ruhepause weitere zehn Minuten kräftig weiter gerührt bis sich eine Emulsion ausgebildet hat.

25,7 g Saatlatex nach Beispiel 1, 0,51g einer 15 Gew.%igen wässrigen Lösung Disponil SDS und 456 g VE-Wasser werden in einem 1 L Kolben vorgelegt und unter Rühren (150 U/min) und Stickstoff Inertisierung auf eine Innentemperatur von 84-85°C aufgeheizt. Die Temperatur des Wasserbades wird darauf konstant gehalten. 2,8 mL einer 10 Gew%igen Natriumperoxodisulfatlösung wird zugegeben. Nach einer Minute Pause wird die Monomermischung für die erste Reaktionsstufe mit einer Geschwindigkeit von 3,2 g/min dosiert. Die Innentemperatur steigt während der 20 minütigen Dosierung auf 87 °C an. Im Anschluss an eine zwanzig minütige Nachreaktionszeit werden 3 mL einer 10%igen wässrigen Natriumperoxodisulfatlösung hinzugefügt. Nach einer Minute wird begonnen, die Emulsion der zweiten Reaktionsstufe für 30 Minuten mit einer 2,5 g/min zu dosieren. Im Anschuss wird für 51 Minuten die Dosiergeschwindigkeit auf 8,0 g/min erhöht. Ein Anstieg der Innentemperatur auf Temperaturen größer 88 °C wird durch Senken der Wassertemperatur abgefangen. Nach einer 30-minütigen Nachreaktionszeit wird die Dispersion auf Raumtemperatur abgekühlt und über eine 250 $\mu$m Gaze filtriert.

**Beispiel 3**

Formulierung einer unterkritischen (Meth)Acrylat-Dispersion auf Basis von Mowilith 7714 (Fa. Celanese). Zur Herstellung des Mahlgutes (Vorstufe 1) wurde das Wasser in einem Behälter vorgelegt und alle weiteren Komponenten (siehe Tabelle 1) unter Rühren zugegeben. Als Rühraggregat wurde ein Dissolver mit Zahnscheibe verwendet.

Tabelle 1: Formulierung Mahlgut (Vorstufe 1)

| | |
|---|---|
| Wasser | 16 g |
| Tylose H 6000 YP2 (Hydroxyethylcellulose) | 0,2 g |
| TEGO® Foamex 855 (Entschäumer) | 0,1 g |
| Calgon N (10 Gew%ig) (Dispergierhilfsmittel) | 0,2 g |
| TEGO® Dispers 755W (Dispergierhilfsmittel) | 0,3 g |
| Kronos 2190 ($TiO_2$) | 19 g |
| NaOH (wässrige Lösung, 10 Gew%ig) | 0,2 g |
| Texanol (Filmbildehilfsmittel) | 2,0 g |
| Gesamteinwaage | 37 g |

Im Anschluss erfolgt die Auflackung.

Tabelle 2:

| | Vergleichsbeispiel 1 | Beispiel 3 |
|---|---|---|
| Mahlgut nach Vorstufe 1 | 37 g | 37 g |
| NaOH (wässrige Lösung, 10 Gew%ig) | - | 2,9 g |
| Wasser | - | 2,0 g |
| Mowilith 7714 | 38 g | 15,2 g |
| Hohlkugeldispersion aus Beispiel 2 | - | 28,5 g |
| Acrysol RM 5000 (nichtionischer Verdicker) | 1,0 g | - |
| Gesamteinwaage | 76,0 g | 85,6 g |

Vergleichsbeispiel 1 beschreibt eine klassische Formulierung einer unterkritischen Bautenfarbe mit einer PVK von ca. 20%. Analog dieser Zusammensetzung wurde in Beispiel 3 ein Teil des Bindemittels Mowilith 7714 durch die erfindungsgemäße Hohlkugelndispersion nach Beispiel 2 sowie die erforderliche Menge an Natronlauge zur Quelle der Hohlkugel ersetzt (siehe Tabelle 3). Dies führte zu einer deutlichen Verbesserung der Wasserdampfdiffusion ($S_D$-Wert) gegenüber Vergleichsbeispiel 1 bei nahezu unverändertem Glanz und unveränderter Nassabriebbeständigkeit. Anhand der Helligkeitsdifferenz ($\Delta L^*$-Wert) nach Gilsonite Test kann gezeigt werden, dass beide Filme nicht offenporig sind, und dass die Formulierung unterhalb der kritischen KPVK liegt.

Tabelle 3

| | Vergleichsbeispiel 1 | Beispiel 3 |
|---|---|---|
| pH-Wert | 8,7 | 8,3 |
| $W_{24}$-Wert [kg/(M²*√h)] | 0,01 | 0,04 |
| $S_d$-Wert [m] | 0,99 | 0,18 |
| Glanz 20° [GE] | 40,3 | 45,0 |
| ASTM (Hübe) | 2400 | 2210 |
| Schichtdicke (ASTM) | 80 $\mu$m | 80 $\mu$m |
| Gilsonite Test ($\Delta L^*$-Wert) | -0,32 | -0,23 |

### Beispiel 4: Darstellung einer gequollenen Hohlkugeldispersion

Die erfindungsgemäße Hohlkugeldispersion nach Beispiel 2 wurde mit Wasser auf 20 Gew.-% verdünnt und der pH-Wert mit Hilfe 10 gew%iger Natronlauge auf einen pH-Wert von 8,5 eingestellt.

### Beispiel 5: Formulierungsbeispiele für Klarlacke

In dieser Versuchsserie werden unpigmentierter Dispersionslack auf Basis einer Acryl-/Methacrylsäureester-Copolymer Dispersion Ecrylic RA 111 der Fa. Ecronova untersucht.
Die in den Tabellen 4 und 5 genannten Dispersionen wurden im genannten Verhältnis miteinander gemischt und mit einem Speedmixer homogenisiert. Die Angaben zum Verhältnis von Bindemittel zu Hohlkugeln beziehen sich auf das Verhältnis der Feststoffgehalte zueinander.

Tabelle 4: Formulierungen von unpigmentierter Dispersionslacken nach Beispiel 5

| Verhältnis Bindemittel zu Hohlkugel | 80 : 20 | 60 : 40 | 40 : 60 | 20 : 80 |
|---|---|---|---|---|
| Ecrylic RA 111 in g | 16,0 | 12,0 | 8,0 | 4,0 |
| Hohlkugeldispersion nach Beispiel 4 in g | 10,0 | 20,0 | 30,0 | 40,0 |
| Gesamt in g | 26,0 | 32,0 | 38,0 | 44,0 |

**Vergleichsbeispiel 2:**

In Vergleichsbeispiel wurde Rhopaque Ultra E der Fa. Dow Chemical Company eingesetzt. Hier handelt es sich um eine nicht-filmbildende Hohlkugel-Dispersion mit einer Partikelgröße von 400 nm, welches mit NaOH neutralisiert ist. Die Mischung wurde wie in Beispiel 5 beschrieben hergestellt.

Tabelle 5: Formulierungen von Lacken nach Vergleichsbeispiel 2

| Verhältnis Bindemittel zu Rhopaque Ultra E | 80 : 20 | 60 : 40 |
|---|---|---|
| Ecrylic RA 111 in g | 16,0 | 12,0 |
| Ropaque Ultra E in g | 10,0 | 20,0 |
| Gesamt in g | 26,0 | 32,0 |

Tabelle 6: Ergebnisse zu den Beispiel 5 und Vergleichsbeispiel 2

| | | | Ropaque Ultra E | | Hohlkugeldispersion nach Beispiel 4 | | | |
|---|---|---|---|---|---|---|---|---|
| Verhältnis Bindemittel zu zweiter Komponente | 100 : 0 | 80 : 20 | 60 : 40 | 80 : 20 | 60 : 40 | 40 : 60 | 20 : 80 |
| Glanz 20° | 157 | 10,5 | 2,0 | 142 | 128 | 131 | 139 |
| $S_d$-Wert [m] | 2,72 | 2,67 | Nicht messbar, da Risse im Film | 1,38 | 0,49 | 0,32 | 0,2 |

In der Beispielserie unter Beispiel 5 soll gezeigt werden, dass die erfindungsgemäßen Hohlkugeln auch in einem unpigmentierten Klarlack auf Basis des Bindemittels Ecrylic RA 111 der Fa. Ecronova Polymer einen erstaunlichen Einfluss auf die Wasserdampfdurchlässigkeit haben. Bei Einsatz der Hohlkugeldispersion wird z. B. schon bei einem Hohlkugelanteil von 20 Gew% bezogen auf das Verhältnis der Bindemittel eine deutliche Erhöhung der Wasserdampfdurchlässigkeit bei nahezu unverändertem Glanz gefunden. Bei weiterer Erhöhung des Anteils der Hohlkugeldispersion nach Beispiel 4 steigt die Wasserdampfdurchlässigkeit weiter an, ohne dass der Glanz der Filme signifikant beeinflusst wird.

Als Vergleichsbeispiel 2 wird die Dispersion Ropaque Ultra E der Firma Dow verwendet. Dabei handelt es sich um eine nicht filmbildende Hohlkugel-Dispersion mit einer Partikelgröße von ca. 400 nm, welche mit NaOH neutralisiert ist. Wie zu erwarten, wird durch Zusatz von Ropaque Ultra E bei einem Mischungsverhältnis von 80:20 der $S_d$-Wert nicht signifikant gesenkt. Eine höhere Zugabe der Ropaque Type führte zu Rissen im Film und deshalb konnten die Wasserdampfdurchlässigkeit nicht geprüft werden. Der Einsatz der nicht - filmbildenden Hohlkugel-Dispersion führte zu einer starken Abnahme des Glanzes und zur Trübung des Filmes.

**Patentansprüche**

1. Verwendung von Mikropartikeln in Dispersionslacken oder -farben zur Verbesserung der Wasserdampfdurchlässigkeit, **dadurch gekennzeichnet, dass** der Dispersionslack oder die Dispersionsfarbe mindestens 3,0 Gew% gequollene, einen Hohlraum aufweisende, Mikropartikel enthält, dass es sich bei den Mikropartikeln um Emulsionspolymerisate mit Kern-Schale-Struktur, die eine oder mehrere Schalen aufweisen, handelt, wobei der Kern Säuregruppen aufweist und die äußerste Schale eine Glasübergangstemperatur unter 50 °C hat, wobei die Glasübergangstemperatur mittels der Fox-Gleichung bestimmt wird.

2. Verwendung von Mikropartikeln nach Anspruch 1, **dadurch gekennzeichnet, dass** die Pigmentvolumenkonzentration der Farbe unterhalb der KPVK liegt.

3. Verwendung von Mikropartikeln gemäß mindestens einem der Ansprüche 1 oder 2, **dadurch gekennzeichnet, dass** diese bei einer Temperatur unter 50 °C gequollen werden.

4. Verwendung von Mikropartikeln gemäß mindestens einem der Ansprüche 1 bis 3, **dadurch gekennzeichnet, dass** der Mikropartikel mehr als eine Schale aufweist, und mindestens eine innere Polymerisationsstufe einen Anteil an säurefunktionellen Monomeren von mehr als 5 Gew%, bevorzugt mehr als 30 Gew% und besonders bevorzugt mehr als 45 Gew% bezogen auf diese Polymerisationsstufe, aufweist.

5. Verwendung von Mikropartikeln gemäß mindestens einem der Ansprüche 1 bis 3, **dadurch gekennzeichnet, dass** die Emulsionspolymerisate einem Durchmesser zwischen 30 nm und 1200 nm, bevorzugt zwischen 50 nm und 600 nm und besonders bevorzugt zwischen 60 nm und 300 nm haben.

6. Verwendung von Mikropartikeln gemäß mindestens einem der Ansprüche 1 bis 4, **dadurch gekennzeichnet, dass** die Emulsionspolymerisate einen mit Hilfe einer wässrigen Base gequollenen Polymerkern (A), der unter Copolymerisation eines oder mehrerer ungesättigter säurefunktioneller Monomere hergestellt wurde, sowie eine Polymerschale (B), die überwiegend aus nicht-ionischen, ethylenisch ungesättigten Monomeren besteht, enthalten.

7. Verwendung von Mikropartikeln gemäß Anspruch 6 , **dadurch gekennzeichnet, dass** es sich bei der wässrigen Base mindestens zum Teil um Basen mit einem Siedepunkt von mindestens 110 °C wie z. B. Alkalimetallhydroxide oder Erdalkalimetall(hydr)oxide handelt.

8. Verwendung von Mikropartikeln gemäß Anspruch 6, **dadurch gekennzeichnet, dass** es sich bei den ungesättigten säurefunktionellen Monomeren um Acrylsäure, Methacrylsäure, Maleinsäure, Maleinsäureanhydrid, Fumarsäure, Itaconsäure und/oder Crotonsäure handelt.

9. Verwendung von Mikropartikeln gemäß Anspruch 6, **dadurch gekennzeichnet, dass** es sich bei den nicht-ionischen, ethylenisch ungesättigten Monomeren in der Polymerschale um Acrylate, Methacrylate, Styrol und/oder um Mischungen, überwiegend aus Acrylaten und/oder Methacrylaten und/oder Styrol zusammengesetzt, handelt.

10. Verwendung von Mikropartikeln gemäß mindestens einem der Ansprüche 1 bis 9, **dadurch gekennzeichnet, dass** die Polymerschale (B) mindestens 0,5 Gew% eines vernetzenden bifunktionellen Monomeren enthält.

11. Verwendung von Mikropartikeln gemäß mindestens einem der Ansprüche 1 bis 10, **dadurch gekennzeichnet, dass** die Mikropartikel eine Struktur aufweisen, bei der um einen Kern mindestens zwei Schalen angeordnet sind.

12. Verwendung von Mikropartikeln gemäß mindestens einem der Ansprüche 1 bis 11, **dadurch gekennzeichnet, dass** der Dispersionslack oder -farbe anschließend als Bautenfarbe verwendet wird.

13. Dispersionslack oder Dispersionsfarbe verwendbar gemäß mindestens einem der Ansprüche 1 bis 12, **dadurch gekennzeichnet, dass** der Dispersionslack oder die Dispersionsfarbe mindestens 10,0 Gew% eines Bindemittels und mindestens 3,0 Gew% der Mikropartikel, wie in Anspruch 1 definiert, zur Verbesserung der Wasserdampfdurchlässigkeit enthält.

14. Dispersionslack oder Dispersionsfarbe gemäß Anspruch 13, **dadurch gekennzeichnet, dass** es sich bei dem Emulsionspolymerisat um einen (meth)acrylatbasierten Kern-Schale-Partikel mit einem säurehaltigen, bei Raumtemperatur basisch quellbaren Kern und einer Schale, eine Glasübergangstemperatur von unter 50 °C aufweisend, handelt.

**Claims**

1. Use of microparticles in dispersion-based paints or varnishes for improving the water vapour permeability, **characterized in that** the dispersion-based paint or varnish comprises at least 3.0 wt% of swollen microparticles having a cavity, and **in that** the microparticles are emulsion polymers with a core-shell structure having one or more shells, the core containing acid groups and the outermost shell having a glass transition temperature below 50°C, the glass transition temperature being determined by means of the Fox equation.

2. Use of microparticles according to Claim 1, **characterized in that** the pigment volume concentration of the paint is below the CPVC.

3. Use of microparticles according to at least one of Claims 1 or 2, **characterized in that** they are swollen at a temperature below 50°C.

4. Use of microparticles according to at least one of Claims 1 to 3, **characterized in that** the microparticle has more than one shell, and at least one inner polymerization stage has a fraction of acid-functional monomers of more than 5 wt%, preferably more than 30 wt% and more preferably more than 45 wt%, based on this polymerization stage.

5. Use of microparticles according to at least one of Claims 1 to 3, **characterized in that** the emulsion polymers have a diameter of between 30 nm and 1200 nm, preferably between 50 nm and 600 nm and more preferably between 60 nm and 300 nm.

6. Use of microparticles according to at least one of Claims 1 to 4, **characterized in that** the emulsion polymers comprise a polymer core (A) which is swollen by means of an aqueous base and was prepared with copolymerization of one or more unsaturated, acid-functional monomers, and a polymer shell (B) which consists predominantly of nonionic, ethylenically unsaturated monomers.

7. Use of microparticles according to Claim 6 , **characterized in that** the aqueous base comprises at least in part bases having a boiling point of at least 110°C, such as alkali metal hydroxides or alkaline earth metal (hydr)oxides.

8. Use of microparticles according to Claim 6, **characterized in that** the unsaturated, acid-functional monomers are acrylic acid, methacrylic acid, maleic acid, maleic anhydride, fumaric acid, itaconic acid and/or crotonic acid.

9. Use of microparticles according to Claim 6, **characterized in that** the nonionic, ethylenically unsaturated monomers in the polymer shell are acrylates, methacrylates, styrene and/or mixtures composed predominantly of acrylates and/or methacrylates and/or styrene.

10. Use of microparticles according to at least one of Claims 1 to 9, **characterized in that** the polymer shell (B) comprises at least 0.5 wt% of a crosslinking difunctional monomer.

11. Use of microparticles according to at least one of Claims 1 to 10, **characterized in that** the microparticles have a structure in which at least two shells are arranged around a core.

12. Use of microparticles according to at least one of Claims 1 to 11, **characterized in that** the dispersion-based paint or varnish is subsequently used as an architectural paint.

13. Dispersion-based paint or dispersion-based varnish useful according to at least one of Claims 1 to 12, **characterized in that** the dispersion-based paint or varnish comprises at least 10.0 wt% of a binder and at least 3.0 wt% of the microparticles as defined in Claim 1, for improving the water vapour permeability.

14. Dispersion-based paint or dispersion-based varnish according to Claim 13, **characterized in that** the emulsion polymer is a (meth)acrylate-based core-shell particle having an acid-containing core which can be swollen basically at room temperature, and a shell having a glass transition temperature of below 50°C.

**Revendications**

1. Utilisation de microparticules dans des vernis ou des peintures en dispersion pour améliorer la perméabilité à la vapeur d'eau, **caractérisée en ce que** le vernis en dispersion ou la peinture en dispersion contient au moins 3,0 % en poids de microparticules gonflées comprenant une cavité, **en ce que** les microparticules sont des polymères en émulsion à structure noyau-enveloppe qui comprennent une ou plusieurs enveloppes, le noyau comprenant des groupes acides et l'enveloppe la plus extérieure ayant une température de transition vitreuse inférieure à 50 °C, la température de transition vitreuse étant déterminée par l'équation de Fox.

2. Utilisation de microparticules selon la revendication 1, **caractérisée en ce que** la concentration volumique en pigments de la peinture est inférieure à la CPVC.

3. Utilisation de microparticules selon au moins l'une quelconque des revendications 1 ou 2, **caractérisée en ce que** celles-ci sont gonflées à une température inférieure à 50 °C.

4. Utilisation de microparticules selon au moins l'une quelconque des revendications 1 à 3, **caractérisée en ce que** les microparticules comprennent plus d'une enveloppe, et au moins une niveau de polymérisation intérieur présente une proportion de monomères à fonction acide de plus de 5 % en poids, de préférence de plus de 30 % en poids et de manière particulièrement préférée de plus de 45 % en poids, par rapport à ce niveau de polymérisation.

5. Utilisation de microparticules selon au moins l'une quelconque des revendications 1 à 3, **caractérisée en ce que** les polymères en émulsion ont un diamètre compris entre 30 nm et 1 200 nm, de préférence entre 50 nm et 600 nm et de manière particulièrement préférée entre 60 nm et 300 nm.

6. Utilisation de microparticules selon au moins l'une quelconque des revendications 1 à 4, **caractérisée en ce que** les polymères en émulsion contiennent un noyau polymère (A) gonflé à l'aide d'une base aqueuse, qui a été fabriqué par copolymérisation d'un ou de plusieurs monomères insaturés à fonction acide, ainsi qu'une enveloppe polymère (B), qui est essentiellement constituée de monomères éthyléniquement insaturés non ioniques.

7. Utilisation de microparticules selon la revendication 6, **caractérisée en ce que** la base aqueuse consiste au moins en partie en des bases ayant un point d'ébullition d'au moins 110 °C, telles que p. ex. des hydroxydes de métaux alcalins ou des (hydr)oxydes de métaux alcalino-terreux.

8. Utilisation de microparticules selon la revendication 6, **caractérisée en ce que** les monomères insaturés à fonction acide sont l'acide acrylique, l'acide méthacrylique, l'acide maléique, l'anhydride de l'acide maléique, l'acide fumarique, l'acide itaconique et/ou l'acide crotonique.

9. Utilisation de microparticules selon la revendication 6, **caractérisée en ce que** les monomères éthyléniquement insaturés non ioniques dans l'enveloppe polymère sont des acrylates, des méthacrylates, du styrène et/ou des mélanges essentiellement composés d'acrylates et/ou de méthacrylates et/ou de styrène.

10. Utilisation de microparticules selon au moins l'une quelconque des revendications 1 à 9, **caractérisée en ce que** l'enveloppe polymère (B) contient au moins 0,5 % en poids d'un monomère bifonctionnel réticulant.

11. Utilisation de microparticules selon au moins l'une quelconque des revendications 1 à 10, **caractérisée en ce que** les microparticules présentent une structure selon laquelle au moins deux enveloppes sont agencées autour d'un noyau.

12. Utilisation de microparticules selon au moins l'une quelconque des revendications 1 à 11, **caractérisée en ce que** le vernis ou la peinture en dispersion est ensuite utilisé en tant que peinture pour bâtiment.

13. Vernis en dispersion ou peinture en dispersion pouvant être utilisé selon au moins l'une quelconque des revendications 1 à 12, **caractérisé en ce que** le vernis en dispersion ou la peinture en dispersion contient au moins 10,0 % en poids d'un liant et au moins 3,0 % en poids des microparticules telles que définies dans la revendication 1, pour améliorer la perméabilité à la vapeur d'eau.

14. Vernis en dispersion ou peinture en dispersion selon la revendication 13, **caractérisé en ce que** le polymère en émulsion est une particule noyau-enveloppe à base de (méth)acrylate qui comprend un noyau contenant un acide, pouvant gonfler par voie basique à température ambiante, et une enveloppe qui présente une température de transition vitreuse inférieure à 50 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0022633 A
- WO 2011009875 A1
- WO 2007006766 A

- EP 0022633 B1
- EP 0073529 B1
- EP 0188325 B1

**In der Beschreibung aufgeführte Nicht-Patentliteratur**

- **H. DÖRR ; F. HOLZINGER.** KRONOS Titandioxid in Dispersionsfarben. KRONOS Titan GmbH, 1989

- **STRAUSS et al.** *Surface Coatings Australia,* 1987, vol. 24 (11), 6-15
- **C.J. MCDONALD ; M.J. DEVON.** *Advances in Colloid and Interface Science,* vol. 99 (3), 181-213